# EUROPEAN PATENT APPLICATION

(11) **EP 4 726 830 A1**
(43) Date of publication of application: **15.04.2026**
(21) Application number: 25207003.2
(22) Date of filing: 06.10.2025
(51) Int. Cl.: H01M 10/04, H01M 50/105, H01M 50/176, H01M 50/55, H01M 50/553, H01M 50/103

(54) **SECONDARY BATTERIES AND A MANUFACTURING METHOD THEREOF**

(30) Priority: 10.10.2024 KR 20240137545
(71) Applicant: SAMSUNG SDI CO., LTD., Yongin-si, Gyeonggi-do 17084 (KR)
(72) Inventor: LIM, Hyojin, 17084 Yongin-Si (KR); LEE, Jeawoan, 17084 Yongin-Si (KR); EO, Soo-Mi, 17084 Yongin-Si (KR); CHO, Byunghuy, 17084 Yongin-Si (KR); BYEON, Junho, 17084 Yongin-Si (KR)
(74) Representative: Maiwald GmbH

(57) **Abstract**

A secondary battery includes: an electrode assembly including a first electrode, a second electrode, and a separator interposed between the first electrode and the second electrode; a lower case having an open top, and including a receiving portion to receive the electrode assembly; and an upper case sealing the open top of the lower case. A first electrode terminal electrically connected to the first electrode is located on one side surface of the lower case; the upper case is integrally extended from an upper edge portion of the one side surface; and the upper case is connected to edge portions of the lower case, other than the upper edge portion of the one side surface, from among open upper edge portions of the lower case.

## Description

### BACKGROUND

### 1. Field

Aspects of embodiments of the present disclosure relate to a secondary battery, and a manufacturing method of the secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Energy density is one of important factors in secondary batteries. In particular, secondary batteries used in electronic devices may be inserted into the electronic devices and used as power sources, so many attempts are being made to increase the energy density of secondary batteries used in the electronic devices.

The above information disclosed in this Background section is for enhancement of understanding of the background of the present disclosure, and therefore, it may contain information that does not constitute related (or prior) art.

### SUMMARY

Energy density may be increased by increasing an amount of electrode assemblies accommodated within a case. As such, a modification to the case may be needed or desired. However, there may be a limit as to how thin the case may be, while still ensuring a sufficient rigidity to reduce a deformation. Therefore, improved methods may be desired to increase the energy density, while ensuring the safety of the secondary batteries.

Embodiments of the present disclosure may be directed to a secondary battery, and a manufacturing method of the secondary battery.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

According to an aspect of the present disclosure, a secondary battery includes: an electrode assembly including a first electrode, a second electrode, and a separator interposed between the first electrode and the second electrode; a lower case having an open top, and including a receiving portion to receive the electrode assembly; and an upper case sealing the open top of the lower case. A first electrode terminal electrically connected to the first electrode is located on one side surface of the lower case; the upper case is integrally extended from an upper edge portion of the one side surface; and the upper case is connected to edge portions of the lower case, other than the upper edge portion of the one side surface, from among open upper edge portions of the lower case.

In an embodiment, the lower case and the upper case may be folded at the upper edge portion of the one side surface.

In an embodiment, the secondary battery may further include flange portions extending outward from the edge portions of the lower case, other than the upper edge portion of the one side surface, from among the open upper edge portions of the lower case.

In an embodiment, the open upper edge portions of the lower case may include: a first edge portion and a second edge portion that are perpendicular to the upper edge portion of the one side surface, and are spaced parallel to each other; and a third edge portion connecting the first edge portion and the second edge portion to each other.

In an embodiment, the flange portions may include: a first flange portion extending in a direction perpendicular to the first edge portion, and parallel to a bottom surface of the lower case; a second flange portion extending in a direction perpendicular to the second edge portion, and parallel to the bottom surface of the lower case; and a third flange portion extending in a direction perpendicular to the third edge portion, and parallel to the bottom surface of the lower case.

In an embodiment, the upper case and the lower case may include stainless steel.

In an embodiment, the upper case may be flat.

In an embodiment, the upper case and the lower case may be electrically connected to the second electrode.

In an embodiment, the first electrode terminal may have a plate form.

In an embodiment, the first electrode terminal may protrude outward from the one side surface of the lower case.

In an embodiment, a second electrode terminal electrically connected to the second electrode may be located on the one side surface of the lower case, and the second electrode terminal may be positioned on a same surface as the one side surface of the lower case.

In an embodiment, an upper edge portion of the one side surface may be thinner than thicknesses of the lower case and the upper case.

According to an aspectof the present disclosure, a manufacturing method of a secondary battery includes: preparing an electrode assembly including a first electrode, a second electrode, and a separator interposed between the first electrode and the second electrode; preparing a case including a lower case and an upper case, the lower case including a receiving portion, an open top, and one side surface on which a first electrode terminal is located, and the upper case being integrally extended from an upper edge portion of the one side surface of the lower case; inserting the electrode assembly into the receiving portion of the lower case; and connecting the upper case and the lower case to each other.

In an embodiment, the manufacturing method may further include connecting the first electrode of the electrode assembly and the first electrode terminal to each other.

In an embodiment, the manufacturing method may further include, before the connecting of the upper case and the lower case to each other, folding the lower case and the upper case at the upper edge portion of the one side surface of the lower case.

In an embodiment, flange portions may extend outward from edge portions of the lower case, other than the upper edge portion of the one side surface, from among open upper edge portions of the lower case.

In an embodiment, the connecting of the upper case and the lower case to each other may include connecting the upper case to the edge portions of the lower case, other than the upper edge portion of the one side surface of the lower case, from among the open upper edge portions of the lower case, by welding.

In an embodiment, the manufacturing method may further include cutting the flange portions along outer ends of the edge portions connected by the welding.

In an embodiment, the lower case and the upper case may include stainless steel.

In an embodiment, the first electrode terminal may protrude outward from the one side surface of the lower case.

According to some embodiments of the present disclosure, a flange portion of a lower case may be omitted, thereby reducing a risk of a short circuit that may occur between an electrode terminal and the flange portion of the case.

According to some embodiments of the present disclosure, a space in which an electrode assembly may be accommodated may be secured equivalent to that of a portion of the flange portion of the lower case that is omitted, so that energy density of the secondary battery may be improved.

According to some embodiments of the present disclosure, a connection process between the lower case and an upper case may be partially omitted, thereby reducing a process time.

According to some embodiments of the present disclosure, a cutting process between the lower case and the upper case may be partially omitted, thereby reducing a process time.

According to some embodiments of the present disclosure, the upper case may not be easily separated from the lower case due to an external impact.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings.
FIG. 1 is an exploded perspective view illustrating a secondary battery according to an embodiment of the present disclosure.
FIG. 2 is a perspective view illustrating a secondary battery, and a left side view illustrating the secondary battery.
FIG. 3 is a perspective view and a left side view of a secondary battery according to an embodiment of the present disclosure.
FIG. 4 is a flowchart illustrating a manufacturing method of a secondary battery according to an embodiment of the present disclosure.
FIGS. 5 and 6 illustrate a manufacturing method of a secondary battery.
FIGS. 7 and 8 illustrate a manufacturing method of a secondary battery according to an embodiment of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local Patent Law.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used hereinafter are for the purposes of describing embodiments of the present disclosure and are not intended to limit the present disclosure.

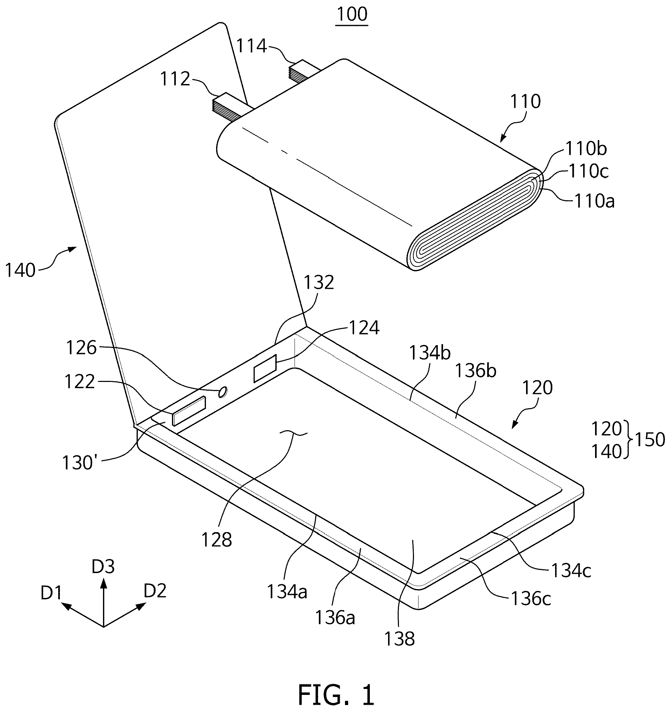

FIG. 1 is an exploded perspective view illustrating a secondary battery according to an embodiment of the present disclosure.

Referring to FIG. 1, a secondary battery 100 according to an embodiment of the present disclosure may include an electrode assembly 110, a lower case 120 including a receiving portion 128 to receive the electrode assembly 110, and an upper case 140 connected to the lower case 120. The upper case 140 and the lower case 120 may be formed integrally with each other. The upper case 140 and the lower case 120 may be collectively referred to as a case 150.

The secondary battery 100 may encompass all suitable kinds of secondary batteries in which the case 150 is made of a metal material, and the upper case 140 and the lower case 120 are formed integrally with each other. The case 150 may form the overall appearance of the secondary battery 100, and may provide a space in which the electrode assembly 110 is accommodated. The material of the case 150 may be a suitable material that has a desired strength (e.g., a certain or predetermined strength), and that exhibits an electrolyte resistance. The case may be formed of a conductive metal, such as aluminum, a nickel-plated steel, stainless steel, or any suitable alloy thereof. For example, the case 150 may be formed of a high-strength stainless steel to ensure a durability despite frequent attachment and detachment within a small electronic device. Stainless steel may be either SUS304 or SUS316.

The electrode assembly 110 may include a first electrode 110a, a second electrode 110b, and a separator 110c interposed between the first electrode 110a and the second electrode 110b. The first electrode 110a may correspond to the anode, and the second electrode 110b may correspond to the cathode. As another example, the first electrode 110a may correspond to the cathode and the second electrode 110b may correspond to the anode.

Each of the first electrode 110a and the second electrode 110b may correspond to (e.g., may be) first and second electrode plates formed in a thin plate shape or a film shape. The electrode assembly 110 may be formed by winding or stacking a stack including the first electrode plate, the separator 110c, and the second electrode plate. When the electrode assembly 110 is a wound stack, for example, such as that shown in FIG. 1, a winding axis may be parallel to or substantially parallel to a longitudinal direction D1 of the lower case 120. As another example, the electrode assembly 110 may be a stack kind rather than a wound kind, and the shape of the electrode assembly 110 is not particularly limited in the present disclosure.

The electrode assembly 110 may be a Z-stack electrode assembly in which a first electrode plate and a second electrode plate are inserted on both sides (e.g., opposite sides) of a separator 110c folded in a Z-stack. In addition, the electrode assembly 110 may be formed such that one or more electrode assemblies are stacked so that their long sides are adjacent to each other and accommodated in the receiving portion 128 of the lower case 120, but the number of electrode assemblies 110 is not particularly limited in the present disclosure.

When the first electrode plate is a positive electrode plate, the positive electrode plate may be formed by applying a first electrode composite including a transition metal oxide or the like to a first electrode current collector plate formed of a metal foil, such as aluminum or an aluminum alloy. The first electrode plate may include a first electrode tab 112 or a first non-coated portion, which is an area where the first electrode composite is not applied. The first electrode tab 112 may be a passage for a current flow between the first electrode plate and a first collector. The first electrode tab 112 may be formed integrally with the first non-coated portion, or may be connected to the first non-coated portion by welding or the like. For example, the first electrode tab 112 may be formed by cutting the first electrode plate so that it protrudes to one side in advance when manufacturing the first electrode plate, or may protrude further to one side than the separator without a separate cutting.

When the second electrode plate is a negative electrode plate, the negative electrode plate may be formed by applying a second electrode composite including graphite or carbon to a second electrode current collector plate formed of a metal foil, such as copper, a copper alloy, nickel, or a nickel alloy. The second electrode plate may include a second electrode tab 114 or a second non-coated portion, which is an area where the second electrode composite is not applied. The second electrode tab 114 may be a passage for a current flow between the second electrode plate and a second collector. The second electrode tab 114 may be formed integrally with the second non-coated portion, or may be connected to the second non-coated portion by welding or the like. For example, the second electrode tab 114 may be formed by cutting the second electrode plate so that it protrudes to one side in advance when manufacturing the second electrode plate, or may protrude further to one side than the separator without a separate cutting.

The case 150 of the secondary battery 100 according to an embodiment may include the lower case 120 and the upper case 140. Referring to FIG. 1, the lower case 120 accommodates the electrode assembly 110 as described above, and a top thereof may be opened. The upper case 140 may seal the open top of the lower case 120. The lower case 120 may have a rectangular parallelepiped shape with one side open, and the upper case 140 may have a roughly plate shape that is combined with the lower case 120. The method by which the upper case 140 seals the lower case 120 will be described in more detail below.

In an embodiment, a first electrode terminal 122, a second electrode terminal 124, and an electrolyte injection port 126 may be formed on the inner surface 130' of the lower case 120. FIG. 1 shows the inner surface 130' of the lower case 120 in which the first electrode terminal 122, the second electrode terminal 124, and the electrolyte injection port 126 are formed, as viewed from the inside of the receiving portion 128. The first electrode terminal 122 may be electrically connected to one end of the first electrode tab 112 of the electrode assembly 110 by welding or the like. The second electrode terminal 124 may be electrically connected to one end of the second electrode tab 114 of the electrode assembly 110 by welding or the like. Because the first electrode tab 112 is a part of the first electrode 110a or is connected to the first electrode 110a, the first electrode terminal 122 may exhibit first electrode characteristics. Additionally, because the second electrode tab 114 is a part of the second electrode 110b or is connected to the second electrode 110b, the second electrode terminal 124 may exhibit second electrode characteristics.

The electrolyte injection port 126 may be a through hole for injecting an electrolyte (e.g., a liquid) into the case 150 after the electrode assembly 110 described above is housed in the case 150. Referring to FIG. 1, the electrolyte injection port 126 may penetrate from the one inner surface 130' of the lower case 120 to the opposite outer surface. The electrolyte injection port 126 may be formed in an area between the first electrode terminal 122 and the second electrode terminal 124, or approximately in the center of the one inner surface 130'. This may be to increase a degree and/or a speed of immersion of the electrode assembly 110 in the injected electrolyte, but the position of the electrolyte injection port 126 is not limited thereto, and the electrolyte injection port 126 may not necessarily be formed on the same side as that of the first electrode terminal 122 and the second electrode terminal 124.

In an embodiment, the case 150 of the secondary battery 100 may be formed integrally with the upper case 140 and the lower case 120. In more detail, the upper case 140 may be integrally formed at an upper edge portion 132 of the one inner surface 130' of the lower case 120. As illustrated in FIG. 1, the upper case 140 and the lower case 120 may share the upper edge portion 132 of the one inner surface 130', and the upper case 140 and the lower case 120 may be brought into close proximity to each other by folding at the upper edge portion 132 of the one inner surface 130'. In order to enable a smoother folding at the upper edge portion 132 of the one inner surface 130', the upper edge portion 132 of the one inner surface 130' may be thinner than thicknesses of the lower case 120 and the upper case 140.

In an embodiment, the upper case 140 may be connected to edge portions excluding the upper edge portion132 of the one inner surface 130', among the open upper edge portions of the lower case 120, for example, such as to a first edge portion 134a, a second edge portion 134b, and a third edge portion 134c, as illustrated in FIG. 1. Referring to FIG. 1, the open upper edge portions of the lower case 120 may include the first edge portion 134a and the second edge portion 134b that are perpendicular to or substantially perpendicular to the upper edge portion 132 of the one inner surface 130' and are spaced parallel to or substantially parallel to each other, and the third edge portion 134c that connects the first edge portion 134a and the second edge portion 134b to each other. The third edge portion 134c may be parallel to or substantially parallel to the upper edge portion 132 of the one inner surface 130'. The first edge portion 134a, the second edge portion 134b, and the third edge portion 134c may be approximately straight, and a corner where the edge portions meet each other may be shaped such that the straight edges are approximately perpendicular to each other, or the corner may have a curvature. However, the present disclosure is not particularly limited on the shape of the corner.

The upper case 140 may be roughly plate shaped, and the upper case 140 may be folded at the edge portion 132 so that the surface facing the electrode assembly 110 may be connected to the first edge portion 134a, the second edge portion 134b, and the third edge portion 134c. In an embodiment, the connection between the upper case 140 and the lower case 120 may be made at the first edge portion 134a, the second edge portion 134b, and the third edge portion 134c. A connection may be a method of connecting a metal to a metal, and any suitable method as would be understood by those having ordinary skill in the art may be used without any particular limitation. For example, stainless steel materials may be joined by laser welding.

According to an embodiment, the lower case 120 may further include flange portions 136a, 136b, and 136c extending outwardly of the lower case 120 from the edge portions 134a, 134b, and 134c excluding the upper edge portion 132 of the one inner surface 130', among the open upper edge portions of the lower case 120. The outer side of the lower case 120 may refer to the outer side in a direction parallel to or substantially parallel to the bottom surface 138 of the lower case 120, as illustrated in FIG. 1. For example, the first flange portion 136a may be a plate-shaped member that is perpendicular to or substantially perpendicular to the first edge portion 134a, and extends by a suitable length (e.g., a predetermined length) in the opposite direction of D2 from the first edge portion 134a. The second flange portion 136b may be a plate-shaped member that is perpendicular to or substantially perpendicular to the second edge portion 134b, and extends by a suitable length (e.g., a predetermined length) in the D2 direction from the second edge portion 134b. The third flange portion 136c may be a plate-shaped member that is perpendicular to or substantially perpendicular to the third edge portion 134c, and extends by a suitable length (e.g., a predetermined length) in the opposite direction of D1 from the third edge portion 134c.

The flange portion of the lower case 120 of the secondary battery 100 according to an embodiment may be used to secure a connection portion with the upper case 140, which is a plate. Accordingly, in the case 150 that is folded at the upper edge portion132 of the one inner surface 130' of the lower case 120 as shown in FIG. 1, the flange portion extending in the D1 direction may be omitted.

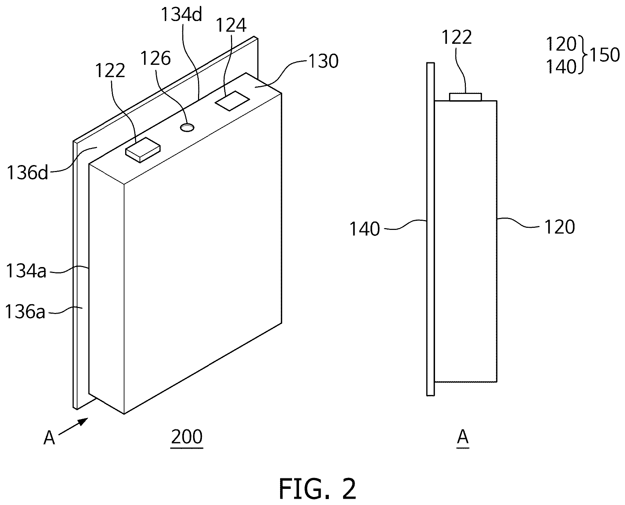

FIG. 2 is a perspective view illustrating a secondary battery, and a left side view illustrating the secondary battery. FIG. 2 shows a secondary battery 200 including a case 150 in which a separate upper case 140 and a lower case 120 are combined with each other. The electrode assembly accommodated inside the secondary battery 200 may be the same or substantially the same as that described above.

In an embodiment, the materials of the upper case 140 and the lower case 120 may be the same as each other, such as stainless steel.

The upper case 140 may be flat, and the edge area of the lower surface of the upper case 140 may be combined to a flange portion extending outward from the edge portions of the upper portion of the lower case 120 by a suitable method such as welding. Thereafter, the flange portions extending outward from the upper edge portions of the lower case 120 may be cut along the outer end of the edge portions including a fourth edge portion 134d at the upper portion of one outer surface of the lower case 120 where the first electrode terminal 122, the second electrode terminal 124, and the electrolyte injection port 126 are formed, or at a suitable distance (e.g., a predetermined distance) from the outer end, so that the length in the direction in which the flange portions extend may be shortened.

The first electrode terminal 122 may protrude outward from one outer surface 130 of the lower case 120. In more detail, the direction in which the first electrode terminal 122 protrudes may be approximately parallel to the longitudinal direction of the case 150. The first electrode terminal 122 may be electrically connected to the first electrode tab of the electrode assembly at the inner surface 130' of the first electrode terminal 122, as described above with reference to FIG. 1. The first electrode terminal 122 may be in the form of a plate, but the present disclosure is not limited thereto, and the first electrode terminal 122 may be in the form of a rivet.

Referring to the left side view A, the uppermost part of the fourth flange portion 136d of the upper case 140 may be higher than the uppermost part of the first electrode terminal 122. When cutting of the fourth flange portion 136d of the upper case 140 in the direction toward the lower case 120 is performed, this may be to prevent damage to the first electrode terminal 122. Due to the area occupied by the fourth flange portion 136d, there may be a limitation on the size of the electrode assembly that may be accommodated inside the case 150. Accordingly, the energy density of the secondary battery 200 may not be secured as needed or desired.

Referring to FIG. 2, the second electrode terminal 124 may form the same surface as one outer surface 130 of the lower case 120. The second electrode terminal 124 may have no length protruding from the one outer surface 130 of the lower case 120. In other words, the thickness of the lower case 120 and the thickness of the second electrode terminal 124 may be the same or substantially the same as each other, so that there may be no portion protruding outward. The second electrode terminal 124 may be electrically connected to the second electrode tab of the electrode assembly at the inner surface of the second electrode terminal 124, as described above with reference to FIG. 1. Accordingly, the upper case 140 and the lower case 120 may be electrically connected to the second electrode 110b. Because the case may be a metal container, the case itself may also act as a terminal. For example, the case 150 may be electrically connected to the second electrode 110b, and may exhibit second electrode characteristics. The second electrode terminal 124 may be a part that is connected to a terminal of the electronic device when mounted on the electronic device.

For insulation between the first electrode terminal 122 and the case 150 having second electrode characteristics, an insulating member for insulation may be applied or attached between a through hole of the lower case 120 and the first electrode terminal 122 inserted into the through hole.

As shown in the left side view A of the secondary battery 200, there may be a risk of a short circuit occurring at the fourth flange portion 136d extending from the upper edge portion 132 of the one outer surface 130 of the lower case 120 due to a contact with the protruding first electrode terminal 122. This may be because the upper case 140 has second electrode characteristics and the first electrode terminal 122 has first electrode characteristics, so they have different polarities from each other. In this case, there may be a risk of a fire due to a short circuit.

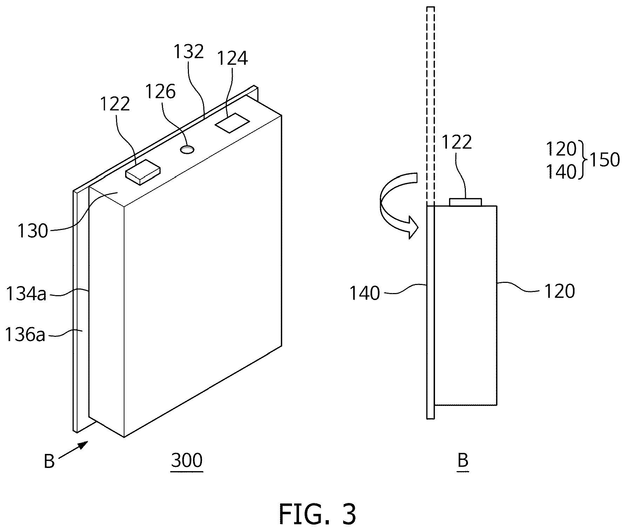

FIG. 3 is a perspective view and a left side view of a secondary battery according to an embodiment of the present disclosure.

Referring to FIG. 3, in some embodiments of the present disclosure, the upper edge portion 132 of the one outer surface 130 may be the same or substantially the same as the upper edge portion 132 of one inner surface (e.g., 130' in FIG. 1). The edge may refer to a portion having a suitable thickness (e.g., a certain or predetermined thickness) where the case 150 is folded. Hereinafter, redundant description as those described above with reference to FIG. 2 may not be repeated.

In an embodiment, the first electrode terminal 122 may form the same surface as the one outer surface 130 of the lower case 120. In another embodiment, the first electrode terminal 122 may protrude outward from the one outer surface 130 of the lower case 120. Even when the first electrode terminal 122 protrudes, if (e.g., when) the case 150 according to an embodiment is applied, the risk of a short circuit that may occur between the first electrode terminal 122 and the case 150 may be reduced or significantly reduced.

In an embodiment, the case 150 may be folded at the upper edge portion 132 of the one outer surface 130 of the lower case 120, thereby omitting the flange portion. Accordingly, as shown in the left side view B, the height in the longitudinal direction of the case 150 may be the highest at the first electrode terminal 122. Accordingly, when a secondary battery 300 is mounted and used in an electronic device, the risk of a short circuit that may occur due to a contact between the first electrode terminal 122 and the case 150 having second electrode characteristics may be reduced.

Referring to the left side view B of the secondary battery 300 according to an embodiment, in order to prevent a contact with the protruding first electrode terminal 122 before the upper case 140 is folded, the thickness of the edge portion may be adjusted so that the surface formed by one side of the upper case 140 and the upper edge portion of the lower case 120 may not be bent more than approximately 180°.

In an embodiment, the size of the upper case 140 may be the same or substantially the same as the size of the flange portion of the lower case 120, or may be larger than the size of the flange portion of the lower case 120.

In an embodiment, the first electrode terminal 122 and the second electrode terminal 124 may be riveted to the one outer surface 130 of the lower case 120 in a riveted structure, or may be welded to the one outer surface 130 in a plate structure.

In the secondary battery 200 illustrated in FIG. 2, to seal the case 150, a connection process, such as welding the upper case 140 and the lower case 120 to each other, may be performed at the first flange portion 136A, the second flange portion 136B, the third flange portion 136C, and the fourth flange portion 136D. On the other hand, in the secondary battery 300 according to an embodiment, even if (e.g., when) only a connection process, such as welding the upper case 140 and the lower case 120 to each other, is performed at the first flange portion 136A, the second flange portion 136B, and the third flange portion 136C, the upper case 140 and the lower case 120 may be combined with each other to seal the case 150.

Because the connection process such as welding at the fourth edge portion (e.g., 134d in FIG. 2) of the fourth flange portion (e.g., 136D in FIG. 2) may be omitted, an amount of foreign matter that may be generated due to welding, such as soot, may be reduced. Additionally, a degree of a roughness that may be caused by welding may be reduced. Because the welding process may be omitted, additional cleaning processes to remove welded foreign matter, such as soot and a roughness, may be omitted. Additionally, the cutting process may be omitted because the fourth flange portion may not need to be removed. As such, a cutting process, such as laser cutting, and a connection process, such as welding, may be omitted from the manufacturing process of the case 150, and a process time may be shortened.

In the secondary battery 300 according to an embodiment, the fourth flange portion (e.g., 136d in FIG. 2) may be omitted compared to that of the secondary battery (e.g., 200 in FIG. 2), so that the size of the electrode assembly accommodated inside the case 150 may be increased by the size of the fourth flange portion. Accordingly, the energy density of the secondary battery 300 may be improved.

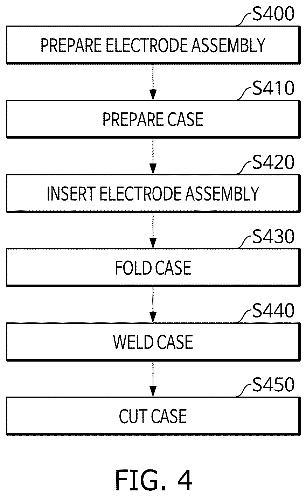

FIG. 4 is a flowchart illustrating a manufacturing method of a secondary battery according to an embodiment of the present disclosure.

Referring to FIG. 4, the manufacturing method of the secondary battery according to an embodiment of the present disclosure may be initiated with preparing of an electrode assembly (S400), which may include a first electrode, a second electrode, and a separator interposed between the first electrode and the second electrode.

A case may be prepared (S410). The case may include a lower case and an upper case. The lower case may include a receiving portion, an open top, and one outer surface on which a first electrode terminal is formed. The upper case may be integrally formed with or connected to an upper edge portion of the one outer surface of the lower case.

In an embodiment, the case may be a container including (e.g., made of) a metal material, and the case may be formed by a suitable processing method, such as deep drawing, so as to have the shapes of the upper case and the lower case described above without a connection process, such as welding. For example, the shape of the case may be manufactured by processing a raw material of a stainless steel in the order of blanking, drawing, and trimming, but the present disclosure is not limited thereto, any the shape of the case may be manufactured by any suitable processing method known to those having ordinary skill in the art.

The electrode assembly may be inserted (S420), such as into the receiving portion of the lower case.

The first electrode of the inserted electrode assembly and the first electrode terminal may be connected to each other, such that the first electrode terminal may have the first electrode characteristics.

Next, the case may be folded (S430), for example, such that the lower case and the upper case may be folded at the upper edge portion of the one outer surface of the lower case.

The upper case and the lower case may be connected to each other. In an embodiment, the upper case and the lower case may be connected to each other by welding (S440). For example, the upper case and the lower case may be connected to each other by laser welding. In more detail, the upper edge portion of the side of the lower case and the upper case may be connected to each other by welding, so that the case may be sealed. In an embodiment, connecting the upper case and the lower case to each other by welding or the like (S440) may include connecting the upper case to edge portions excluding an upper edge portion of one outer surface of the lower case, among open upper edge portions of the lower case, by welding.

In more detail, after the plate-shaped upper case is seated on the flange portion of the lower case, welding may be performed in a direction from the outer surface of the upper case toward the flange portion of the lower case.

In an embodiment, the case may be cut (S450), such that the flange portions of the lower case may be cut along the outer ends of the edge portions connected to each other by welding. For example, the cutting may be performed by laser cutting. In more detail, the plate-shaped upper case overlaps with the flange portion of the lower case, and the cutting may be performed in a direction from the upper case toward the edge portion of the flange portion. Additionally, the cutting may be made along the outer end spaced a suitable distance (e.g., a predetermined distance) from the edge portion. Accordingly, the flange portion of the lower case may remain for a distance (e.g., a predetermined distance) even after cutting. In other words, a part of the flange portion of the lower case remaining after the cutting may have a suitable width or length.

The flow chart illustrated in FIG. 4 and the description thereof are provided as examples for convenience of illustration, and the scope of the present disclosure is not limited thereto. For example, one or more processes in the flowchart of FIG. 4 may be added, changed, or deleted, the order of one or more processes may be changed, and/or one or more processes may be performed concurrently (e.g., simultaneously or substantially simultaneously) with each other.

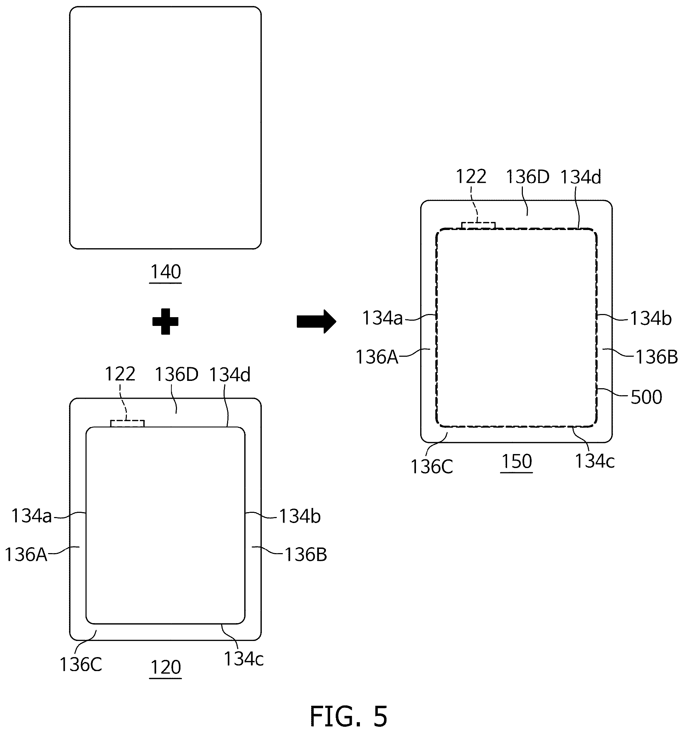

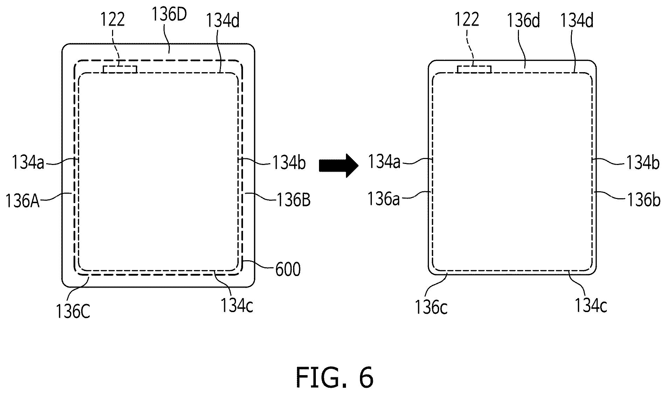

FIGS. 5 and 6 illustrate a manufacturing method of a secondary battery. FIGS. 5 and 6 illustrate some processes for manufacturing the secondary battery described above with reference to FIG. 2. In FIGS. 5 and 6, the inserting of the electrode assembly into the case 150 and the injecting of an electrolyte are not shown.

Referring to FIG. 5, the case 150 of the secondary battery may be manufactured through combining of the lower case 120 having a receiving portion formed therein to receive an electrode assembly and the plate-shaped upper case 140 to each other. This may be initiated by seating the upper case 140 on the upper surface of the lower case 120.

The lower case 120 before being combined with the upper case 140 may include a fourth flange portion 136D extending from the fourth edge portion 134d of the upper side of one outer surface 130 where the first electrode terminal 122 is formed. The first edge portion 134a and the second edge portion 134b of the lower case 120 that are perpendicular to or substantially perpendicular to the fourth edge portion 134d may be spaced parallel to or substantially parallel to each other, so as to determine the length in the width direction of the receiving portion in which the electrode assembly is received. The third edge portion 134c may be perpendicular to or substantially perpendicular to the first edge portion 134a and the second edge portion 134b, and may connect the first edge portion 134a and the second edge portion 134b to each other. The third edge portion 134c may be parallel to or substantially parallel to the fourth edge portion 134d. The third edge portion 134c and the fourth edge portion 134d may determine the length in the longitudinal direction of the receiving portion in which the electrode assembly is received.

As illustrated in FIG. 5, in addition to the fourth flange portion 136D described above, the lower case 120 may include a first flange portion 136A extending outwardly of the lower case 120 from the first edge portion 134a, a second flange portion 136B extending outwardly of the lower case 120 from the second edge portion 134b, and a third flange portion 136C extending outwardly of the lower case 120 from the third edge portion 134c.

The upper case 140 is seated on the flange portion of the lower case 120, and welding is performed along the first edge portion 134a, the second edge portion 134b, the third edge portion 134c, and the fourth edge portion 134d in a direction from the upper case 140 toward the lower case 120, so that a case 150 in which the upper case 140 and the lower case 120 are combined with each other may be manufactured. Accordingly, a welding portion 500 may be formed along the first edge portion 134a, the second edge portion 134b, the third edge portion 134c, and the fourth edge portion 134d. Welding foreign matter may be formed at the welding portion 500. Additionally, the welding portion 500 may have a higher degree of roughness than that of other portions of the case 150.

The corners where the edges that determine the size of the receiving portion of the lower case 120 meet each other may have a suitable curvature (e.g., a specific or predetermined curvature). For example, a corner where the first edge portion 134a and the fourth edge portion 134d meet each other may have a curvature formed at the outer end. Additionally, the corner where the flange portions of the lower case 120 meet each other may have the same or substantially the same curvature as those of the corners of the edge portions. There are no specific restrictions on whether or not a curvature is formed and the degree of curvature.

Next, a secondary battery may be manufactured through cutting of the flange portion of the lower case 120. Referring to FIG. 6, the cutting portion 600 for preventing or substantially preventing a short circuit between the case 150 and the first electrode terminal 122 may include a cutting portion of the fourth flange portion 136D at a distance away from the fourth edge portion 134d that is longer than the protruding length of the first electrode terminal 122. In more detail, cutting may be performed in a direction from the welded upper case 140 toward the lower case 120. Because the cutting portion 600 is formed at a higher position than that of the first electrode terminal 122, a short circuit between the first electrode terminal 122 and the case may be prevented or substantially prevented. Accordingly, the fourth flange portion 136d after cutting may be relatively larger in size than those of the first flange portion 136a, the second flange portion 136b, and the third flange portion 136c.

Further, as illustrated in FIG. 6, the cutting portion 600 of the upper case 140 and the lower case 120 may include a portion spaced apart from the first edge portion 134a of the first flange portion 136A by a suitable distance (e.g., a predetermined distance), a portion spaced apart from the second edge portion 134b of the second flange portion 136B by a suitable distance (e.g., a predetermined distance), and a portion spaced apart from the third edge portion 134c of the third flange portion 136C by a suitable distance (e.g., a predetermined distance). The flange portions 136a, 136b, 136c, 136d after cutting may be smaller in size than those of the flange portions 136A, 136B, 136C, 136D before cutting. Additionally, the fourth flange portion 136d after cutting may be larger in size than those of the first flange portion 136a, the second flange portion 136b, and the third flange portion 136c after cutting.

Referring to FIG. 6, the lower case 120 of the secondary battery after manufacturing may include flange portions 136a, 136b, 136c, 136d extending from the open upper edge portions 134a, 134b, 134c, 134d of the lower case 120 to the outside of the lower case 120.

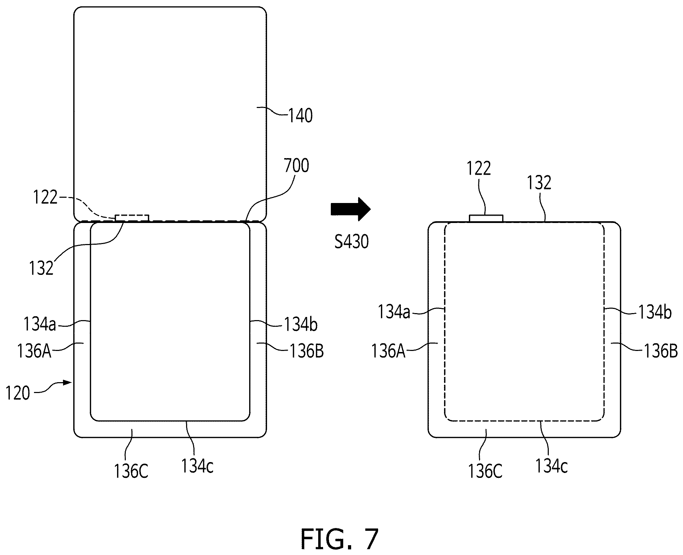

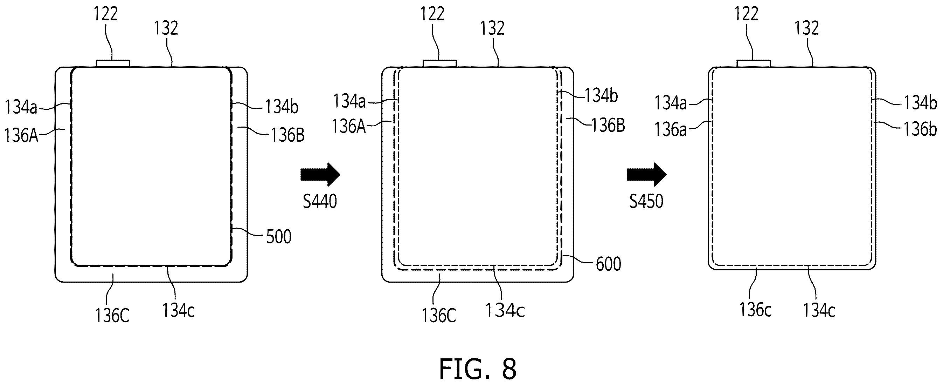

FIGS. 7 and 8 illustrate a manufacturing method of a secondary battery according to an embodiment of the present disclosure. FIGS. 7 and 8 illustrate some processes for manufacturing the secondary battery described above with reference to FIG. 3. In FIGS. 7 and 8, the inserting of the electrode assembly into the case and the injecting of the electrolyte are not shown.

Referring to FIG. 7, a case of the secondary battery according to an embodiment may include a lower case 120 having a receiving portion formed therein to receive an electrode assembly, and a plate-shaped upper case 140 integrally formed with or connected to the lower case 120. A case in which the lower case 120 and the upper case 140 are integrally connected to each other at the upper edge portion 132 of one outer surface of the lower case 120 where the first electrode terminal 122 is formed may be manufactured by a deep drawing method within a press process. Afterwards, the upper edge portion 132 of the outer surface may be folded to place the upper case 140 to cover the flange portion of the lower case 120 (S430).

If (e.g., when) the upper case 140 and the lower case 120 are formed integrally with each other, compared to if (e.g., when) separate metal plates are attached to each other as shown in FIG. 5, the difficulty of firmly attaching the metals to each other, or a stress being concentrated at an attachment boundary, which may easily lead to a detachment by an external impact, may be reduced.

The first edge portion 134a and the second edge portion 134b of the lower case 120 are approximately perpendicular to the upper edge portion 132 of the one outer surface, and are spaced parallel to or substantially parallel to each other, so as to determine the length in the width direction of the receiving portion in which the electrode assembly is received. The third edge portion 134c may be perpendicular to or substantially perpendicular to the first edge portion 134a and the second edge portion 134b, and may connect the first edge portion 134a and the second edge portion 134b to each other. The third edge portion 134c may be parallel to or substantially parallel to the upper edge portion 132 of the one outer surface. The third edge portion 134c and the upper edge portion 132 of the one outer surface may determine the length in the longitudinal direction of the receiving portion in which the electrode assembly is received.

Further, as illustrated in FIG. 7, the lower case 120 according to an embodiment may include a first flange portion 136A extending outwardly of the lower case 120 from the first edge portion 134a, a second flange portion 136B extending outwardly of the lower case 120 from the second edge portion 134b, and a third flange portion 136C extending outwardly of the lower case 120 from the third edge portion 134c.

In an embodiment, as illustrated in FIGS. 7 and 8, the upper case 140 may be seated on the flange portion of the lower case 120 through folding (S430). For example, the folding portion 700 may be formed at the upper edge portion 132 of the outer surface. The folding portion 700 may be thinner than the thickness of other portions of the upper case 140 or the lower case 120. The upper edge portion 132 of the outer surface may not have an extended flange portion. Accordingly, during the manufacturing process and/or the use of the secondary battery according to an embodiment, a short circuit may not occur due to a contact between a protruding terminal, such as the first electrode terminal 122, and the flange portion of the case.

In an embodiment, the size of the upper case 140 may be adjusted such that the upper case 140 may be seated on the flange portions 136A, 136B, and 136C of the lower case 120 after the case is folded. The flange portions 136A, 136B, and 136C may be used for a connection process, such as welding with the upper case 140.

Referring to FIG. 8, welding may be performed along the first edge portion 134a, the second edge portion 134b, and the third edge portion 134c in a direction from the upper case 140 toward the lower case 120 to seal the case (S440). Accordingly, the welding portion 500 may be formed along the first edge portion 134a, the second edge portion 134b, and the third edge portion 134c. Welding foreign matter may be formed at the welding portion 500. Additionally, the welding portion 500 may have a higher degree of roughness than that of other portions of the case. However, because welding may not be performed on the folding portion 700 or the upper edge portion 132 of the outer surface, welding foreign matter and/or roughness may not occur, and a process time may be shortened as the welding portion 500 is reduced.

In an embodiment, the corners where the edges that determine the size of the receiving portion of the lower case 120 meet each other may have a suitable curvature (e.g., a specific or predetermined curvature). For example, a corner where the first edge portion 134a and the upper edge portion 132 of the one outer surface meet each other may have a suitable curvature (e.g., a specific or predetermined curvature) formed at the outer end. Additionally, the corner where the flange portions of the lower case 120 meet each other may have the same or substantially the same curvature as those of the corners of the edge portions. There are no specific restrictions on whether or not a curvature is formed and the degree of curvature.

Next, a secondary battery may be manufactured through a cutting of the flange portion of the lower case 120 (S450). In more detail, the upper case 140 and the lower case 120 may be cut together in a direction from the upper case 140 toward the lower case 120. Referring to FIG. 8, the cutting portion 600 of the upper case 140 and the lower case 120 may include a portion spaced apart from the first edge portion 134a of the first flange portion 136A by a suitable distance (e.g., a predetermined distance), a portion spaced apart from the second edge portion 134b of the second flange portion 136B by a suitable distance (e.g., a predetermined distance), and a portion spaced apart from the third edge portion 134c of the third flange portion 136C by a suitable distance (e.g., a predetermined distance). The cutting portion 600 may refer to a portion that is cut to have a shape that is approximately similar to the shapes of the edge portions in which the curvatures of the corners of the first edge portion 134a, the second edge portion 134b, and the third edge portion 134c are reflected. The flange portions 136a, 136b, 136c after cutting may be smaller in size than that of each of the flange portions 136A, 136B, 136C before cutting.

Because the case according to an embodiment may not have a flange portion extending from the upper edge portion 132 of the one outer surface of the lower case 120 where the first electrode terminal 122 is formed, a separate cutting process may not be used or required, and accordingly, a design of a cutting portion to prevent or substantially prevent a short circuit between the first electrode terminal 122 and the case may not be used or required. Therefore, a process time may be shortened by omitting the cutting process.

Referring to FIG. 8, the lower case 120 of the secondary battery after manufacturing may include flange portions 136a, 136b, and 136c extending from the open upper edge portions 134a, 134b, and 134c of the lower case 120 to the outside of the lower case 120. In this case, the upper edge portion 132 of the one outer surface may be raised to the uppermost part of the fourth flange portion (e.g., 136d in FIG. 6), so that the space of the receiving portion in which the electrode assembly may be received may be expanded. In other words, the space of the receiving portion may be increased by a size (e.g., a length or a width) of the omitted fourth flange portion (e.g., 136d in FIG. 6).

### Description of Some Reference Symbols

100: Secondary battery
110: Electrode assembly
110a: Anode
110b: Cathode
110c: Separator
112: First electrode tab
114: Second electrode tab
120: Lower case
140: Upper case
150: Case
122: First electrode terminal
124: Second electrode terminal
126: Electrolyte injection port
128: Receiving portion

## Claims

1. A secondary battery (100) comprising:
an electrode assembly (110) comprising a first electrode (110a), a second electrode (110b), and a separator (110c) interposed between the first electrode (110a) and the second electrode (110b);
a lower case (120) having an open top, and comprising a receiving portion (128) to receive the electrode assembly (110); and
an upper case (140) sealing the open top of the lower case (120),
wherein:
a first electrode terminal (122) electrically connected to the first electrode (110a) is located on one side surface (130) of the lower case (120);
the upper case (140) is integrally extended from an upper edge portion (132) of the one side surface (130); and
the upper case (140) is connected to edge portions (134a, 134b, 134c) of the lower case (120), other than the upper edge portion (132) of the one side surface (130), from among open upper edge portions of the lower case (120).

2. The secondary battery (100) as claimed in claim 1, wherein the lower case (120) and the upper case (140) are folded at the upper edge portion (132) of the one side surface (130).

3. The secondary battery (100) as claimed in claim 1 or 2, further comprising:
flange portions (136a, 136b, 136c) extending outward from the edge portions (134a, 134b, 134c) of the lower case (120), other than the upper edge portion (132) of the one side surface (130), from among the open upper edge portions of the lower case (120).

4. The secondary battery (100) as claimed in claim 3, wherein the open upper edge portions of the lower case (120) comprise:
a first edge portion (134a) and a second edge portion (134b) that are perpendicular to the upper edge portion (132) of the one side surface (130), and are spaced parallel to each other; and
a third edge portion (134c) connecting the first edge portion (134a) and the second edge portion (134b) to each other.

5. The secondary battery (100) as claimed in claim 4, wherein the flange portions comprise:
a first flange portion (136a) extending in a direction perpendicular to the first edge portion (134a), and parallel to a bottom surface (138) of the lower case (120);
a second flange portion (136b) extending in a direction perpendicular to the second edge portion (134b), and parallel to the bottom surface (138) of the lower case (120); and
a third flange portion (136c) extending in a direction perpendicular to the third edge portion (134c), and parallel to the bottom surface (138) of the lower case (120).

6. The secondary battery (100) as claimed in any one of the preceding claims, wherein the first electrode terminal (122) protrudes outward from the one side surface (130) of the lower case (120).

7. The secondary battery (100) as claimed in any one of the preceding claims, wherein a second electrode terminal (124) electrically connected to the second electrode (110b) is located on the one side surface (130) of the lower case (120), and the second electrode terminal (124) is positioned on a same surface as the one side surface (130) of the lower case (120).

8. The secondary battery (100) as claimed in any one of the preceding claims, wherein an upper edge portion (132) of the one side surface (130) is thinner than thicknesses of the lower case (120) and the upper case (140).

9. A manufacturing method of a secondary battery (100), comprising:
preparing an electrode assembly (110) comprising a first electrode (110a), a second electrode (110b), and a separator (110c) interposed between the first electrode (110a) and the second electrode (110b);
preparing a case (150) comprising a lower case (120) and an upper case (140), the lower case (120) comprising a receiving portion (128), an open top, and one side surface (130) on which a first electrode terminal (122) is located, and the upper case (140) being integrally extended from an upper edge portion (132) of the one side surface (130) of the lower case (120);
inserting the electrode assembly (110) into the receiving portion (128) of the lower case (120); and
connecting the upper case (140) and the lower case (120) to each other.

10. The manufacturing method of the secondary battery (100) as claimed in claim 9, further comprising:
connecting the first electrode (110a) of the electrode assembly (110) and the first electrode terminal (122) to each other.

11. The manufacturing method of the secondary battery (100) as claimed in claim 9 or 10, further comprising:
before the connecting of the upper case (140) and the lower case (120) to each other, folding the lower case (120) and the upper case (140) at the upper edge portion (132) of the one side surface (130) of the lower case (120).

12. The manufacturing method of the secondary battery (100) as claimed in any one of the claims 9 to 11, wherein flange portions (136a, 136b, 136c) extend outward from edge portions (134a, 134b, 134c) of the lower case (120), other than the upper edge portion (132) of the one side surface (130), from among open upper edge portions of the lower case (120).

13. The manufacturing method of the secondary battery (100) as claimed in claim 12, wherein the connecting of the upper case (140) and the lower case (120) to each other comprises:
connecting the upper case (140) to the edge portions (134a, 134b, 134c) of the lower case (120), other than the upper edge portion (132) of the one side surface (130) of the lower case (120), from among the open upper edge portions of the lower case (120), by welding.

14. The manufacturing method of the secondary battery (100) as claimed in claim 13, further comprising:
cutting the flange portions (136a, 136b, 136c) along outer ends of the edge portions (134a, 134b, 134c) connected by the welding.

15. The manufacturing method of a secondary battery (100) as claimed in any one of the preceding claims, wherein the first electrode terminal (122) protrudes outward from the one side surface (130) of the lower case (120).
